# EUROPÄISCHE PATENTSCHRIFT

(11) **EP 1 854 663 B1**
(45) Veröffentlichungstag und Bekanntmachung des Hinweises auf die Patenterteilung: **05.11.2008**
(21) Anmeldenummer: 06008060.3
(22) Anmeldetag: 19.04.2006
(51) Int. Cl.: B60P 7/08, B32B 27/08

(54) **Antirutsch-Unterlage zur Sicherung von Ladegut und dessen Herstellung**
Anti-skid support for securing of cargo and its manufacture
Support antidérapant pour la fixation de chargement et sa préparation

(43) Veröffentlichungstag der Anmeldung: 14.11.2007
(73) Patentinhaber: Polymer-Tec Halbzeuge GmbH, 55566 Bad Sobernheim (DE)
(72) Erfinder: Kropp, Dirk, Dr., 55411 Bingen (DE); Stampfer, Stefan, 73730 Esslingen am Neckar (DE)
(74) Vertreter: Müller-Gerbes Wagner Albiger Patentanwälte

(56) Entgegenhaltungen:
- DE-A1- 10 040 803
- DE-A1- 10 325 231
- DE-A1- 10 332 327
- DE-U1- 8 121 378
- DE-U1- 29 614 068
- DE-U1- 29 821 334
- DE-U1-8202004 014 17
- GB-A- 2 199 493

## Beschreibung

Die Erfindung betrifft eine Antirutsch-Unterlage zur Sicherung eines Ladeguts eines Lastkraftwagens oder dergleichen sowie die Herstellung der Antirutsch-Unterlage.

Bei einer Vollbremsung, bei einem Ausweichmanöver oder bei Unebenheiten in der Fahrbahn darf gemäß der in Deutschland geltenden Straßenverkehrsordnung das Ladegut auf der Ladefläche des Lastkraftwagens (LKW) nicht verrutschen. Ähnliches gilt sinngemäß auch für andere europäische Länder, nicht zuletzt bedingt durch gesetzliche Vorschriften der Europäischen Union. Aber nur in wenigen Fällen ist die ausreichende Sicherung des Ladeguts auf der Ladefläche gegen Verrutschen allein durch den Fahrzeugaufbau des Lastkraftwagens möglich. Deshalb gehören gleithemmende Hilfsmittel, wie Antirutsch-Unterlagen, zur Standardausrüstung für jeden professionellen Transport. Die Antirutsch-Unterlage wird dabei zwischen die Ladefläche des Lastkraftwagens und der zu transportierenden Ladung gelegt. Durch die Antirutsch-Unterlage soll die Reibkraft erhöht werden, die notwendig ist, das Ladegut auf der Ladefläche zu verschieben.

Nicht nur bei Lastkraftwagen, sondern auch bei anderen Transportmitteln muss Sorge dafür getragen werden, dass das Ladegut während des Transports nicht verrutscht. Beispiele für andere Transportmittel sind Schiffe, Flugzeuge, Güterzüge.

Üblicherweise wird beim LKW-Transport die Ladung durch Spanngurte oder dergleichen verzurrt, so dass die Ladung nicht nur mit ihrem Gewicht, sondern auch mit einer auf die Verzurrung zurückzuführenden zusätzlichen Verzurr- oder Sicherungskraft gegen die Antirutsch-Unterlage bzw. die Ladefläche gedrückt wird. Durch diese zusätzliche Kraft erhöht sich die für die Transportsicherung wichtige Reibkraft zwischen Ladung und Ladefläche.

Das Verhältnis der einem Verrutschen entgegenwirkenden Reibkraft und der Kraft, mit der die Ladung gegen die Ladefläche drückt, entspricht dem Gleitreibwert µ zwischen Ladegut und Ladefläche. Es liegt auf der Hand, dass der Gleitreibwert µ maßgeblich durch die zwischen Ladung und Ladefläche angeordnete Antirutsch-Unterlage beeinflusst werden kann. Ein hoher Gleitreibwert und damit eine große Sicherheit gegen ein Verrutschen des Ladeguts auf der Ladefläche ist dann gegeben, wenn einerseits die Paarung Ladung und Antirutsch-Unterlage und andererseits die Paarung Antirutsch-Unterlage und Ladefläche jeweils einen hohen Gleitreibwert aufweisen.

Herkömmliche Antirutsch-Unterlagen sind aus Polyurethan-gebundenem Gummigranulat, die Gleitreibwerte von µ = 0,6 und mehr erreichen. Jedoch sind derartige Antirutsch-Unterlagen als Sondermüll zu behandeln. Auch weisen sie ein nicht unerhebliches Gewicht auf, was die Handhabung derartiger Antirutsch-Unterlagen schwierig macht.

Aus der DE 103 32 327 B4 ist eine recyclebare Antirutsch-Unterlage offenbart, die einen Trägerkörper umfasst, der eine erste und zweite Oberfläche aufweist. Auf der ersten Oberfläche des Trägerkörpers und auf der zweiten Oberfläche des Trägerkörpers sind jeweils eine Papierhaftfläche mit rutschhemmenden Eigenschaften aufkaschiert, wobei die Papierhaftfläche mit den Oberflächen des Trägerkörpers jeweils permanente Verbindungen bildet. Der Trägerkörper ist dabei vorzugsweise aus Vollpappe, so dass die Antirutsch-Unterlage als Altpapier entsorgt werden kann. Auch ist in der DE 103 32 327 B4 offenbart, der Trägerkörper könne auch als Polyethylen-Schaumschicht ausgebildet sein. Jedoch ist dadurch eine einfache Entsorgung der Antirutsch-Unterlage als Altpapier nicht mehr möglich, da die Papierhaftflächen zur Entsorgung von dem Kunststoff-Trägerkörper getrennt werden müssen.

Die DE 81 21 378 U1 offenbart eine rutschfeste flächige Unterlage, bei der auf einer Seite einer textilen Schicht eine Schaumstoffschicht und eine Schaumstofflage aufgebracht sind und auf der anderen Seite der textilen Schicht Kunststoffnoppen ausgebildet sind. In einem bevorzugten Ausführungsbeispiel bestehen dabei die Schaumstoffschicht aus Polyethylen und die Schaumstofflage aus Polyurethan.

Die DE 298 21 334 U1 zeigt eine rutschfeste Transportmatte, die ein biegeweiches Band umfasst, das allseits mit wenigstens einer Schaumstoffschicht beschichtet ist. Aufgrund des biegeweiches Bandes, das vorzugsweise ein Bleiblechband ist, lässt sich die Transportmatte in spezielle Halterungsfalten legen, um so ein Ladegut zu sichern. Wenigstens eine der beiden Schaumstoffschichten liegt dabei unmittelbar auf der Ladefläche auf.

Die GB 2 199 493 A offenbart eine Antirutsch-Matte mit zwei Gewebestücken, die an ihren Rändern zusammengenäht sind und somit einen Innenraum zur Aufnahme von Kügelchen bilden, die vorzugsweise aus Polystyrol sind. Um hohe Gleitreibwerte zu erreichen, schlägt die GB 2 199 493 A vor, dass die Gewebestücke aus Jeansstoff mit 65 % Baumwolle und 35 % Polyester sein können.

Die DE 296 14 068 U1 beschreibt einen Ladeflächenbelag für Kraftfahrzeuge mit einem handelsüblichen rutschfesten Belag und einer darunter befindlichen handelsüblichen elastischen und federnden Schaumstoffschicht. Auf den Begriff "handelsüblich" geht die DE 296 14 068 U1 nicht weiter ein. Wird der rutschfeste Belag durch eine Polyurethan-Schicht gebildet, so stellt sich auch hier das Problem der Entsorgung.

Der DE 100 40 803 A1 ist eine Antirutsch-Matte mit einer Kunststoffplatte, an der an einer Oberseite und an eine Unterseite jeweils eine Antirutsch- oder Haftfolie angebracht ist. Die DE 100 40 803 A1 macht dabei keine Angaben, aus welchen Material die Antirutsch- oder Haftfolien sein können, so dass sich auch eine mögliche Entsorgung schwierig gestalten könnte. Als Kunststoffplatte wird eine schlagzähe Polycarbonat-Platte vorgeschlagen.

Die DE 20 2004 014 178 U1 beschreibt eine rutschhemmende Unterlage in Gestalt eines vorzugsweise zweischichtig mit einem rutschhemmenden Polymer beschichteten Kraftpapiers oder Kartons. In einem bevorzugten Ausführungsbeispiel ist das rutschhemmende Polymer durch eine Polyurethanfolie bebildet, so dass sich auch hier eine Entsorgung schwierig gestalten könnte.

Der DE 103 25 231 A1 kann eine Antirutsch-Matte entnommen werden, die ein Maschensubtrat, bestehend aus sich kreuzenden Fäden, und ein Beschichtungsmaterial umfasst, welches im Herstellungsprozess beim Eintauchen des Maschensubtrats in das Beschichtungsmaterial an den Fäden haften bleibt und danach aufgeschäumt wird. Dadurch entsteht eine unebene Oberfläche mit einer Saugwirkung, die gemäß DE 103 25 231 A1 rutschhemmend sein soll.

Die DE 199 05 642 A1 offenbart eine einlagige rutschhemmende Matte, die aus flexiblen, elastischen Material besteht. Als Beispiel dafür wird Ethylen-Vinylacetat (EVA) genannt. Die DE 199 05 642 A1 macht jedoch keine Angaben darüber, ob durch eine Mehrlagigkeit die Funktionalität der Matte erhöht werden kann.

Der Erfindung liegt daher die Aufgabe zugrunde, eine Antirutsch-Unterlage bereitzustellen, durch die sich das Ladegut auf der Ladefläche gegen Verrutschen besonders gut sichern lässt, die kostengünstig herstellbar ist, leicht zu handhaben ist und in einfacher Weise zu entsorgen ist.

Die der Erfindung zugrunde liegende Aufgabe wird mit der Merkmalskombination gemäß Anspruch 1 gelöst. Bevorzugte Ausführungsbeispiele der Erfindung können den Unteransprüchen 2 bis 8 entnommen werden.

Die Antirutsch-Unterlage gemäß Anspruch 1 weist eine Schicht aus einem Polymer-Schaum und eine erste Antirutsch-Schicht auf, die auf einer Seite des Polymer-Schaums aufgebracht ist, wobei die erste Antirutsch-Schicht als eine Antirutsch-Polymerschicht ausgebildet ist. Die Antirutsch-Polymerschicht und der Polymer-Schaum sind aus Polyolefin, insbesondere aus Polyethylen oder Polypropylen. Zudem ist eine zweite Antirutsch-Schicht vorgesehen, die auf einer anderen Seite des Polymer-Schaums aufgebracht ist und ebenfalls als eine Antirutsch-Polymerschicht ausgebildet ist. Der Gleitreibwert µ der beiden Antirutsch-Polymerschichten beträgt dabei mindestens 0,6.

Ein einfaches Recyclen des Polymer-Schaums und der Antirutsch-Schichten ist insbesondere dann gegeben, wenn sie beide aus einem gleichen Polyolefin sind, beispielsweise beide aus Polyethylen bzw. aus einem Copolymer des Polyethylens.

Der erfindungsgemäße Aufbau der Antirutsch-Unterlage hat den Vorteil, dass sowohl der Gleitreibwert der Paarung zwischen Ladung und Antirutsch-Unterlage einerseits und der Gleitreibwert der Paarung Antirutsch-Unterlage und Ladefläche des Lastkraftwagens andererseits durch die beiden Antirutsch-Polymerfolien maßgeblich bestimmt werden kann.

Alternativ - was durch die Erfindung nicht gedeckt wird - ist es möglich, an der anderen Seite des Polymer-Schaums eine selbstklebende Schicht aufzubringen, so dass die Antirutsch-Unterlage entweder mit dem Ladegut oder der Ladefläche eine Klebverbindung eingeht. Es ist jedoch darauf hinzuweisen, dass - im Falle, wenn keine Schicht auf der anderen Seite des Polymer-Schaums vorgesehen ist - durch entsprechende Zusätze auch der Polymer-Schaum einen hohen Gleitreibwert (zum Beispiel µ > 0,6, vorzugsweise größer 0,65 oder sogar größer als 0,7) aufweisen kann, so dass bei einer gegebenen Auflagekraft des Ladeguts auf der Ladefläche große Reibekräfte und damit eine große Sicherheit gegen Verrutschen erzielt werden können.

Durch den bei Belastung zusammengedrückten Polymer-Schaum der Antirutsch-Unterlage werden Unebenheiten der Ladung oder der Ladefläche ausgeglichen, so dass die Antirutsch-Unterlage sowohl an dem Ladegut als auch an der Ladefläche nicht nur punktuell, sondern groß- oder vollflächig anliegt, wodurch eine bessere Antirutschwirkung erzielt wird. Die oben beschriebenen Unebenheiten können beispielsweise durch kleine Steinchen oder dergleichen auf der Ladefläche verursacht werden, was jedoch durch die Schicht aus dem Polymer-Schaum zuverlässig ausgeglichen wird. Die Antirutsch-Polymerschicht lässt einen derartigen Ausgleich der Unebenheiten aufgrund ihrer geringen Steifigkeit auch zu, was bei einer Antirutsch-Papierschicht wegen ihrer hohen Steifigkeit nur bedingt der Fall ist. Zudem schützt der Polymer-Schaum die Ladung vor mechanischer Beschädigung.

Vorzugsweise ist der Polymer-Schaum als Polyethylen-Schaum ausgebildet. Bevorzugte Dichten des Polymer-Schaums bzw. des Polyethylen-Schaums betragen 20 bis 400 kg/m³. Ein bevorzugter Bereich erstreckt sich von 20 bis 200 kg/m³.

Die Dicke des Polymer-Schaums kann 0,5 bis 20 mm betragen, in besonderen Fällen auch bis zu 25 mm. In einem bevorzugten Ausführungsbeispiel beträgt die Dicke 0,8 bis 5 mm. Durch die angegebenen Dichten und Dicken des Polymer-Schaums lässt sich eine sehr gute Antirutschwirkung erzielen, wobei die Antirutsch-Unterlage noch einfach zu handhaben ist. Dies betrifft das Gewicht der Antirutsch-Unterlage und auch eine möglicherweise gewünschte Aufrollbarkeit der Antirutsch-Unterlage. Zudem kann die Antirutsch-Unterlage bei üblichen Druckbelastungen beim LKW-Transport gegebene Unebenheiten von Ladegut und/oder Ladefläche noch zuverlässig ausgleichen.

In einem bevorzugten Ausführungsbeispiel sind die erste und die zweite Antirutsch-Schicht hinsichtlich eines Aufbaus, einer Dicke, einer Dichte und/oder eines Materials gleich ausgebildet. Dies hat den Vorteil, dass bei der Auslegung auf der Ladefläche die Antirutsch-Unterlage nicht falsch herum verlegt werden kann.

Die erste Antirutsch-Schicht kann ein Flächengewicht zwischen 20 bis 100 g/m² aufweisen. In einem bevorzugten Ausführungsbeispiel beträgt das Flächengewicht 30 bis 80 g/m². Besonders gute Ergebnisse wurden mit einer Antirutsch-Unterlage erreicht, bei der die erste Antirutsch-Schicht ein Flächengewicht von ca. 35 bis 45 g/m² aufweist.

Die bevorzugten Werte für die erste Antirutsch-Schicht gelten sinngemäß auch für die zweite Antirutsch-Schicht. Jedoch ist es möglich, dass sich die erste und die zweite Antirutsch-Schicht hinsichtlich ihrer Werte voneinander unterscheiden.

Die Antirutsch-Schichten können aufgrund ihrer Gleitreibwerte µ, die vorzugsweise über 0,65 und idealerweise über 0,7 liegen, an ihren dem Polymer-Schaum abgewandten Oberflächen glatt, also ohne Profilierung oder dergleichen ausgebildet sein. Durch die glatten Oberflächen lässt sich etwaiger Dreck leicht von der Antirutsch-Unterlage entfernen, wodurch eine gleichbleibend gute Antirutsch-Wirkung erzielt werden kann.

Die erste Antirutsch-Polymerschicht kann als eine coextrudierte Antirutsch-Polymerfolie mit mehreren Schichten ausgebildet sein. Eine dieser Schichten weist dann durch geeignete Zusätze die erforderlichen Antirutscheigenschaften auf.

In einem bevorzugten Ausführungsbeispiel können die einzelnen Schichten über geeignete Haftvermittler miteinander verbunden sein. Bei dem Haftvermittler kann es sich vorzugsweise um plastifizierten gleichartigen Kunststoff handeln, der bei dem Schaum und der Antirutsch-Polymerschichten eingesetzt wird.

Um hohe Gleitreibwerte zu realisieren, können in die erste Antirutsch-Polymerschicht, in die zweite Antirutsch-Polymerschicht und/oder in den Polymer-Schaum elastischere Polymere eingearbeitet sind. Dazu werden folgende Polymere bevorzugt, die sich sowohl in Polyethylen und Polpropylen einarbeiten lassen: EVA, EBA, EEA; Acrylat-haltige Copolymere; PIB; Metallocen-Polyethylene; Thermoplastische Elastomere auf der Basis von SEBS, SBS oder PP/EPDM; und/oder PP-Copolymere mit hohem Comonomer-Anteil.
Die mehrschichtige Unterlage gemäß Anspruch 1 kann in längeren Streifen mit einer Breite von 150 mm geschnitten sein, wobei dann die Streifen aneinanderliegend oder in gewissen Abständen zueinander auf der Ladefläche des Lastkraftwagens ausgelegt werden. Auch ist es möglich, die Ladefläche vollflächig mit der mehrschichtigen Unterlage auszulegen. In diesem Fall kann die Unterlage eine Breite deutlich mehr von 150 mm aufweisen (z.B. 100 bis 200 cm), wobei sie in Rollen aufwickelbar ist, so dass deren Länge praktisch unbegrenzt ist und für den jeweiligen Einsatz von der Rolle abgeschnitten wird.

Ein Verfahren zur Herstellung einer Antirutsch-Unterlage zeichnet sich dadurch aus, dass die erste Antirutsch-Schicht als eine Antirutsch-Polymerschicht in Form einer Antirutsch-Polymerfolie und/oder in Form einer Schmelzeschicht aus Antirutsch-Polymer auf eine Seite des Polymerschaums aufgebracht wird. Vorzugsweise wird auch auf der anderen Seite des Polymerschaums eine zweite Antirutsch-Polymerschicht in gleicher Weise wie die erste Antirutsch-Polymerschicht aufgebracht.

Anhand in der Zeichnung dargestellter Ausführungsbeispiele wird die Erfindung näher erläutert. Es zeigen:
- Figur 1: eine schematische Darstellung von Ladegut, Antirutsch-Unterlage und Ladefläche eines Lastkraftwagens;
- Figur 2: einen mehrschichtigen Aufbau eines Ausführungsbeispieles für die erfindungsgemäße Antirutsch-Unterlage; und
- Figur 3: einen mehrschichtigen Aufbau eine weiteren Ausführungsbeispiels.

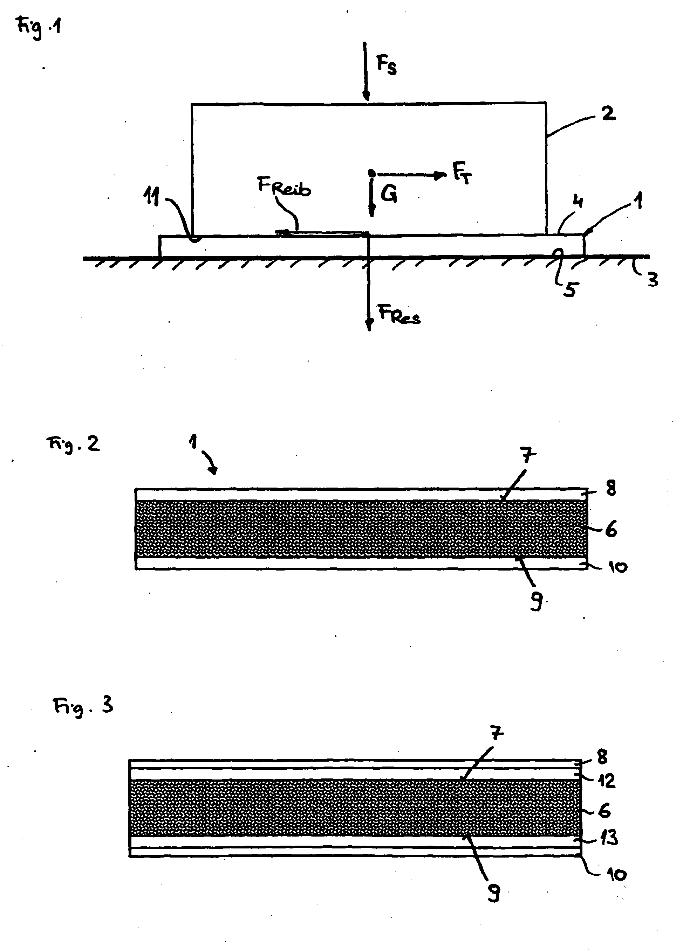

Figur 1 zeigt in schematischer Weise eine Antirutsch-Unterlage, die mit dem Bezugszeichen 1 versehen ist. Die Antirutsch-Unterlage 1 ist zwischen einem Ladegut 2 und einer Ladefläche 3 eines hier nicht weiter dargestellten Lastkraftwagens angeordnet. Das Ladegut 2 ist in Figur 1 als Rechteck dargestellt, es kann aber auch beliebig andere Formen aufweisen. Das Ladegut 2 drückt mit seinem Gewicht G auf die Antirutsch-Unterlage 1 bzw. auf die Ladefläche 3.

Zusätzlich kann auf das Ladegut 2 eine zusätzliche Kraft F_{S} wirken, die durch ein Verzurren oder Niederzurren des Ladeguts 2 herrührt. Somit wird das Ladegut 2 mit einer resultierenden Kraft F_{Res}, also der Summe aus F_{T} und F_{S}. gegen die Antirutsch-Unterlage 1 bzw. die Ladefläche 3 gedrückt.

Bei einem Ausweichmanöver oder bei einer Vollbremsung des Lastkraftwagens erfährt das Ladegut 2 zum Teil sehr hohe Beschleunigungswerte längs zur Ladefläche 3, die ein Verrutschen des Ladeguts 2 verursachen können. Die längs der Ladefläche 3 wirkende Kraft F_{T} ist dabei das Produkt aus der Masse des Ladeguts sowie der Beschleunigung a, die auf das Ladegut 2 wirkt (träge Masse).

Ein Verrutschen des Ladeguts 2 auf der Ladefläche 3 ist nur dann möglich, wenn die Kraft F_{T} größer ist als die Reibkraft F_{Reib}, die einem Verrutschen des Ladeguts 2 auf der Antirutsch-Unterlage 1 bzw. auf der Ladefläche 3 entgegenwirkt.

Die Reibkraft F_{Reib}, die ein Verrutschen des Ladeguts 2 auf der Ladefläche 3 verhindern soll, hängt einerseits von der Reibpaarung zwischen Ladegut 2 und einer Oberseite 4 der Antirutsch-Unterlage 1 und andererseits von der Reibungspaarung einer Unterseite 5 der Antirutsch-Unterlage 1 und der Ladefläche 3 ab. So ist sicherzustellen, dass weder das Ladegut 2 entlang der Oberseite 4 der Antirutsch-Unterlage noch der Verbund aus Ladegut 2 und Antirutsch-Unterlage 1 entlang der Ladefläche 3 verrutscht.

Figur 2 zeigt den mehrschichtigen Aufbau der Antirutsch-Unterlage 1 in einem bevorzugten Ausführungsbeispiel. Die Antirutsch-Unterlage gemäß Figur 2 weist eine Schicht 6 aus einem Polyethylen-Schaum auf. An einer ersten Seite 7 der Schicht 6 oder des Polyethylen-Schaums 6 ist eine erste Antirutsch-Schicht in Form einer Antirutsch-Polymerfolie 8 in geeigneter Weise aufgebracht, wobei die erste Antirutsch-Polymerfolie 8 und der Polyethylen-Schaum 6 fest miteinander verbunden sind. An einer zweiten Seite 9, die der ersten Seite 7 gegenüberliegt, ist eine zweite Antirutsch-Polymerfolie 10 aufgebracht. Auch diese zweite Antirutsch-Polymerfolie ist fest mit dem Polyethylen-Schaum 6 verbunden. Die Antirutsch-Polymerfolien 8, 10 sind jeweils aus Polyolefin und weisen ein Flächengewicht von ca. 40 g/m² auf. Die Dicke des Polyethylen-Schaums 6 beträgt 1 bis 4 mm, wobei er eine Dichte von 20 bis 400 kg/m³ aufweist.

Die erste Antirutsch-Polymerfolie 8 dient dazu, eine hohe Reibung zwischen dem Ladegut 2 und der Antirutsch-Unterlage 1 sicherzustellen (s. Figur 1). Die zweite Antirutsch-Unterlage 10 hingegen sorgt dafür, dass eine hohe Reibung zwischen der Antirutsch-Unterlage 1 und der Ladefläche 3 gegeben ist. Somit sind hohe Reibkräfte gegeben, die ein Verrutschen des Ladeguts 2 auf der Ladefläche 3 entgegenwirken.

Aufgrund der Schicht 6 mit dem Polyethylenschaum kann die Antirutsch-Unterlage 1 Unebenheiten sowohl der Ladefläche 3 als auch an einer Unterseite 11 des Ladeguts 2 ausgleichen. Dadurch liegt das Ladegut 2 nicht nur punktuell, sondern groß- bzw. vollflächig auf der Antirutsch-Unterlage 1 auf. Gleiches gilt sinngemäß für die Auflage der Antirutsch-Unterlage 1 auf der Ladefläche 3. Durch das großflächige bzw. vollflächige Aufliegen von Ladegut 2 bzw. Antirutsch-Unterlage 1 kann sich die beabsichtigte Wirkung der Antirutsch-Unterlage 1 im gewünschten Maße entfalten.

Figur 3 zeigt ein weiteres Ausführungsbeispiel für die Antirutsch-Unterlage 1, wobei zwischen den Antirutsch-Polymerfolien 8, 10 jeweils eine Polyethylen-Schmelzeschicht 12, 13 angeordnet ist. Die Schmelzeschichten 12, 13 sorgen bei der Lamination der Antirutsch-Polymerfolien 8, 10 mit dem Polyethylen-Schaum 6 für eine gute Verbindung.

Die erste Antirutsch-Polymerfolie 8 kann eine coextrudierte Folie sein, die eine vom Polyethylen-Schaum abgewandte Antirutsch-Schicht und eine zum Polyethylen-Schaum zugewandte Polyethylen-Schicht aufweist (die einzelnen Schichten sind in Figur 2 und 3 nicht dargestellt). Beispielsweise kann die Dicke der Antirutsch-Schicht 5 µm betragen, während die Polyethylen-Schicht 25 µm dick ist. Analoges gilt für die zweite Antirutsch-Polymerfolie 10.

### Bezugszeichenliste:

- 1: Antirutsch-Unterlage
- 2: Ladegut
- 3: Ladefläche
- 4: Oberseite
- 5: Unterseite
- 6: Schicht aus Polyethylen-Schaum bzw. Polyethylen-Schaum
- 7: erste Seite
- 8: erste Antirutsch-Polymerfolie
- 9: zweite Seite
- 10: zweite Antirutsch-Polymerfolie
- 11: Unterseite
- 12: Polyethylen-Schmelzeschicht
- 13: Polyethylen-Schmelzeschicht

## Patentansprüche

1. Antirutsch-Unterlage (1) zur Sicherung eines Ladeguts (2) eines Lastkraftwagens oder dergleichen, mit einer Schicht aus einem Polymer-Schaum (6), mit einer ersten Antirutsch-Schicht (8), die auf einer Seite (7) des Polymer-Schaums (6) aufgebracht ist, und mit wenigstens einer zweiten Antirutsch-Schicht (10), die auf einer anderen Seite (9) des Polymer-Schaums (6) aufgebracht ist, **dadurch gekennzeichnet, dass** die erste Antirutsch-Schicht (8) und die zweite Antirutsch-Schicht (10) jeweils als Antirutsch-Polymerschicht mit einem Gleitreibwert µ > 0,6 ausgebildet sind, und dass die Antirutsch-Schichten (8, 10) und der Polymer-Schaum (6) aus Polyolefin sind.

2. Antirutsch-Unterlage (1) nach Anspruch 1, **dadurch gekennzeichnet, dass** eine Dichte des Polymer-Schaums (6) 20 bis 400 kg/m³, vorzugsweise 20 bis 200 kg/m³ beträgt.

3. Antirutsch-Unterlage (1) nach Anspruch 1 oder 2, **dadurch gekennzeichnet, dass** eine Dicke des Polymer-Schaums (6) 0,5 bis 25 mm, vorzugsweise 0,8 bis 5 mm beträgt.

4. Antirutsch-Unterlage (1) nach einem der Ansprüche 1 bis 3, **dadurch gekennzeichnet, dass** die erste und die zweite Antirutsch-Schicht (8, 10) hinsichtlich eines Aufbaus, einer Dicke, einer Dichte und/oder eines Materials gleich sind.

5. Antirutsch-Unterlage (1) nach einem der Ansprüche 1 bis 4, **dadurch gekennzeichnet, dass** die erste Antirutsch-Schicht (8) ein Flächengewicht zwischen 20 bis 100 g/m², vorzugsweise 30 bis 80 g/m² aufweist.

6. Antirutsch-Unterlage (1) nach einem der Ansprüche 1 bis 5, **dadurch gekennzeichnet, dass** die erste Antirutsch-Schicht (8) als eine coextrudierte Antirutsch-Polymerfolie ausgebildet ist.

7. Antirutsch-Unterlage (1) nach einem der Ansprüche 1 bis 6, **dadurch gekennzeichnet, dass** die einzelnen Schichten (6, 8, 10) über geeignete Haftvermittler miteinander verbunden sind.

8. Antirutsch-Unterlage (1) nach einem der Ansprüche 1 bis 7, **dadurch gekennzeichnet, dass** in die erste Antirutsch-Polymerschicht und/oder in die zweite Antirutsch-Polymerschicht Gleitreibwert erhöhende Polymere eingearbeitet sind, insbesondere
- EVA, EBA, EEA;
- Acrylat-haltige Copolymere;
- PIB;
- Metallocen-Polyethylene;
- Thermoplastische Elastomere auf der Basis von SEBS, SBS oder PP/EPDM; und/oder
- PP-Copolymere mit hohem Comonomer-Anteil.

## Claims

1. Anti-slip support (1) for securing a cargo (2) of a truck or the like, with a layer of a polymer foam (6), comprising a first anti-slip layer (8), which is applied to one side (7) of the polymer foam (6), and comprising at least a second anti-slip layer (10), which is applied to another side (9) of the polymer foam (6), **characterised in that** the first anti-slip layer (8) and the second anti-slip layer (10) are in each case configured as an anti-slip polymer layer with a coefficient of sliding friction of µ > 0.6, and **in that** the anti-slip layers (8, 10) and the polymer foam (6) are made of polyolefin.

2. Anti-slip support (1) according to claim 1, **characterised in that** a density of the polymer foam (6) is 20 to 400 kg/m³, preferably 20 to 200 kg/m³.

3. Anti-slip support (1) according to claim 1 or 2, **characterised in that** a thickness of the polymer foam (6) is 0.5 to 25 mm, preferably 0.8 to 5 mm.

4. Anti-slip support (1) according to any one of claims 1 to 3, **characterised in that** the first and the second anti-slip layer (8, 10) are the same with regard to a structure, thickness, density and/or material.

5. Anti-slip support (1) according to any one of claims 1 to 4, **characterised in that** the first anti-slip layer (8) has a mass per unit area between 20 and 100 g/m², preferably 30 to 80 g/m².

6. Anti-slip support (1) according to any one of claims 1 to 5, **characterised in that** the first anti-slip layer (8) is configured as a co-extruded anti-slip polymer film.

7. Anti-slip support (1) according to any one of claims 1 to 6, **characterised in that** the individual layers (6, 8, 10) are connected to one another by means of suitable adhesion promoters.

8. Anti-slip support (1) according to any one of claims 1 to 7, **characterised in that** polymers which increase the coefficient of sliding friction are incorporated into the first anti-slip polymer layer and/or into the second anti-slip polymer layer, in particular
- EVA,EBA,EEA;
- acrylate-containing copolymers;
- PIB;
- metallocene-polyethylenes;
- thermoplastic elastomers based on SEBS, SBS or PP/EPDM; and/or
- PP copolymers with a high comonomer proportion.

## Revendications

1. Support antidérapant (1) pour la fixation d'un chargement (2) d'un camion ou similaire, comportant une couche de mousse de polymère (6), avec une première couche antidérapante (8) appliquée sur un côté (7) de la mousse de polymère (6), et avec au moins une deuxième couche antidérapante (10) appliquée sur un autre côté (9) de la mousse de polymère (6), **caractérisé en ce que** la première couche antidérapante (8) et la deuxième couche antidérapante (10) sont à chaque fois réalisées en tant que couche antidérapantes en polymère,avec un coefficient de friction de glissement µ > 0,6, et que les couches antidérapantes (8,10) et la mousse de polymère (6) sont en polyoléfine.

2. Support antidérapant (1) suivant la revendication 1, **caractérisé en ce que** la masse volumique de la mousse de polymère (6) est de 20 à 400 kg/m³, de préférence de 20 à 300 kg/m³.

3. Support antidérapant (1) suivant la revendication 1 ou 2, **caractérisé en ce que** l'épaisseur de la mousse de polymère (6) est de 0,5 à 25 mm, de préférence de 0,8 à 5 mm.

4. Support antidérapant (1) suivant l'une quelconque des revendications 1 à 3, **caractérisé en ce que** la première et la deuxième couche antidérapante (8, 10) sont identiques quant à la structure, l'épaisseur, la masse volumique et / ou le matériau.

5. Support antidérapant (1) suivant l'une quelconque des revendications 1 à 4, **caractérisé en ce que** la première couche antidérapante (8) présente un poids surfacique de 20 à 100 g/m², de préférence de 30 à 80 g/m².

6. Support antidérapant (1) suivant l'une quelconque des revendications 1 à 5, **caractérisé en ce que** la première couche antidérapante (8) est formée en une feuille de polymère antidérapante coextrudée.

7. Support antidérapant (1) suivant l'une quelconque des revendications 1 à 6, **caractérisé en ce que** les couches individuelles (6, 8, 10) sont liées ensemble par des agents adhérisants appropriés.

8. Support antidérapant (1) suivant l'une quelconque des revendications 1 à 7, **caractérisé en ce que**, dans la première couche de polymère antidérapante et / ou dans la deuxième couche de polymère antidérapante, sont incorporés des polymères augmentant le coefficient de friction de glissement, en particulier :
- de l'EVA, de l'EBA, de l'EEA,
- des copolymères contenant de l'acrylate,
- du PIB,
- du polyéthylène métallocène,
- des élastomères thermoplastiques à base de SEBS, de SBS ou de PP / EPDM, et / ou
- des copolymères de PP à haute fraction de comonomère.
